# EUROPÄISCHE PATENTSCHRIFT

(11) **EP 3 133 334 B1**
(45) Veröffentlichungstag und Bekanntmachung des Hinweises auf die Patenterteilung: **11.09.2019**
(21) Anmeldenummer: 16001523.6
(22) Anmeldetag: 08.07.2016
(51) Int. Cl.: F21S 2/00, H05B 37/04, E04F 13/00, F21S 8/00, H05B 33/08, H05B 37/02, F21Y 105/10, F21Y 115/10

(54) **MODULARES BELEUCHTUNGSSYSTEM MIT KOMMUNIKATIONSMITTEL**
MODULAR LIGHTING SYSTEM HAVING COMMUNICATION MEANS
SYSTEME D'ECLAIRAGE MODULAIRE AVEC MOYEN DE COMMUNICATION

(30) Priorität: 13.07.2015 DE 102015111276
(43) Veröffentlichungstag der Anmeldung: 22.02.2017
(73) Patentinhaber: volatiles lighting GmbH, 10829 Berlin (DE)
(72) Erfinder: Schutz, René, 10437 Berlin (DE); Rhiel, Daniel, 10435 Berlin (DE)
(74) Vertreter: Willems, Volker

(56) Entgegenhaltungen:
- DE-A1-102008 014 172
- DE-B3-102010 047 336
- NL-C2- 1 031 918
- US-A1- 2014 133 137

## Beschreibung

### Technisches Gebiet

1. Die Erfindung betrifft ein modulares Beleuchtungssystem zur Befestigung an einer Fläche enthaltend
   a) wenigstens zwei Beleuchtungsmodule mit wenigstens jeweils einer Festkörperbeleuchtungseinheit,
   b) eine Montageplattform, welche an der Fläche zur lösbaren Aufnahme der Beleuchtungsmodule befestigt ist,
   c) eine elektrische Spannungsversorgung zur Versorgung der Beleuchtungsmodule,
   d) eine Schalt- und/oder eine Steuereinheit zum Schalten und/oder Steuern der Beleuchtungsmodule,
   e) ein Kommunikationsmittel für jedes Beleuchtungsmodul, welches die Beleuchtungsmodule vernetzt und untereinander kommunizieren lässt, wobei
   f) bei Erfassung einer Fehlerhaftigkeit eines Beleuchtungsmoduls benachbarte Beleuchtungsmodule die Aufgaben zur Leuchtversorgung und/oder Spannungsversorgung und/oder Schalt- bzw. Steuerung des
   Beleuchtungsmoduls übernehmen.

### Beschreibung

Solche Beleuchtungssysteme, welche insbesondere an einer Fläche, wie Wände oder Decken befestigt sind, werden vielfältig von Architekten an Gebäuden eingesetzt. Hierdurch sollen besondere Beleuchtungseffekte erzielt werden. Dabei werden diese Beleuchtungssysteme, wie Fliesen an der Wand befestigt. Auch LEDs (Light Emitting Diodes) werden hierbei als Festkörperbeleuchtungseinheit eingesetzt. Die LEDs werden dabei auf einem Trägerkörper eines Beleuchtungsmoduls angeordnet. Der Trägerkörper verfügt über entsprechende elektrische Versorgungsleitungen, die mit einer elektrischen Versorgungsquelle verbunden sind. Die LEDs sind dabei oft auf eine Platine des Trägerkörpers gelötet. Bei mehreren LEDs, wie z.B. mehrfarbigen LEDs, können verschiedene Effekte durch unterschiedliche Ansteuerung erreicht werden. Dies übernimmt in der Regel eine Steuereinheit, welche die LEDs ansteuert.

### Stand der Technik

Aus der DE 10 2005 002 783 ist eine beleuchtete Fliese bekannt. Fliesen, wie sie in Innenräumen von Gebäuden oder im Außenbereich als Fußbodenbelag oder Wandverkleidung verlegt werden, sind üblicherweise Platten aus Ton-, Kaolin-, Quarz- oder Feldspat, die mit mineralischen Zusätzen, die Farben und andere Eigenschaften beeinflussen, ergänzt werden. Für die Verwendung im Innenbereich sind vor allen Dingen Keramikfliesen bekannt, die zur Bildung einer rutschfesten und pflegeleichten Oberfläche mit einer speziellen Behandlung, insbesondere mit einer Glasur versehen sind. Die glasierte Oberfläche kann zur optischen Gestaltung glänzend, halbmatt oder matt, eben, profiliert, wellig oder dekoriert gestaltet sein. Um zum Beispiel in Innenräumen mit gefliesten Flächen zusätzliche optische Effekte zu erzielen, wurden Fliesen mit einer Öffnung versehen, in welcher ein Leuchtmittel, wie z. B. eine elektrische Lampe, angeordnet wurde. Der von diesen Leuchtmitteln ausgehende optische Effekt betrifft im Wesentlichen die Leuchtwirkung des Leuchtmittels selbst, unabhängig von der Gestaltung und Art der das Leuchtmittel umgebenden Fliese. Dabei kann die plattenförmige Fliese aus mehreren Elementen zusammengesetzt sein. Diese Elemente sind vorzugsweise in Form ebener, plattenförmiger Elemente gebildet, die zu einer Fliese zusammengesetzt und in geeigneter Weise miteinander verbunden sind. Die verschiedenen Elemente können unterschiedliche Lichtdurchlässigkeitsgrade aufweisen. Dabei können die einzelnen plattenförmigen Elemente einer beleuchteten Fliese jeweils aus einem einheitlichen Material oder jedes aus unterschiedlichen Materialien bestehen. Die plattenförmige Fliese ist aus mehreren Elementen zusammengesetzt. Diese Elemente sind vorzugsweise in Form ebener, plattenförmiger Elemente gebildet, die zu einer Fliese zusammengesetzt und in geeigneter Weise miteinander verbunden sind. Die verschiedenen Elemente können unterschiedliche Lichtdurchlässigkeitsgrade aufweisen. Dabei können die einzelnen plattenförmigen Elemente einer beleuchteten Fliese jeweils aus einem einheitlichen Material oder jedes aus unterschiedlichen Materialien bestehen. Der Leuchtmittel-Träger ist in Form einer Trägerplatte vorgesehen. Die Trägerplatte ist eine Befestigungsfläche für mehrere Leuchtmittel, die in einer Ebene zueinander beabstandet angeordnet werden können. Dazu ist das Leuchtmittel insbesondere auf der Trägerplatte verlötet. Vorzugsweise wird dabei eine Platine als Trägerplatte verwendet. Als Leuchtmittel finden vorzugsweise so genannte LEDs bzw. Lumineszenzdioden Verwendung, die eine hohe Lebensdauer und einen großen Betriebstemperaturbereich aufweisen.

In der DE 10 2005 018 175 A1 wird ein LED-Modul mit einem LED-Array aus mehreren LED-Chips und einer Steuereinheit zur Regelung eines Betriebsstroms der LED-Chips beschrieben. Die Steuereinheit ist auf einem Träger des LED-Moduls angeordnet und weist ein elektronisches Speichermedium zur Speicherung von Betriebsdaten der LED-Chips auf, wobei eine Regelung des Betriebsstroms in Abhängigkeit von den gespeicherten Betriebsdaten vorgesehen ist.

Die DE 10 2010 047 336 B3 offenbart ein Beleuchtungssystem, insbesondere zur dekorativen Gestaltung einer Wand, einer Decke, eines Bodens, von Möbeln oder dergleichen. Solche Beleuchtungssysteme werden vorzugsweise im Wellness- oder Thermalbereich, in Ruheräumen, Wohnräumen, Kinder- und Schlafzimmern und Außenbereichen eingesetzt. Die Beleuchtungssysteme sind modulartig aufgebaut, wobei die einzelnen modulartigen Dekorationselemente an einem Träger fest montiert sind und elektrische Kontakte zwischen den Modulen einzeln verdrahtet werden müssen. Solche Beleuchtungssysteme erfordern oftmals einen hohen Montageaufwand. Dort wird ferner ein Beleuchtungssystem zur dekorativen Gestaltung insbesondere einer Wand oder einer Decke beschrieben. Dabei wird durch das Beleuchtungssystem zumindest ein Dekorationselement mit einem Körper elektrisch miteinander verbunden. Zumindest ein Leuchtmittel ist an einem Träger befestigt und weist elektrisch leitende Kontaktmittel auf. Das Dekorationselement kann beispielsweise durch eine Magnet-, Steck-, Klett-, Kleb- oder Rastverbindung, ebenfalls am Träger befestigt werden.

Die DE 10 2009 036 382 A1 offenbart ein Lichtplattensystem aus Lichtplattenelementen sowie deren Verschaltung. Die Lichtplattenelemente dienen der Funktionalisierung von Wand- oder Bodenbelägen. Durch die Lichtplattenelemente können Lichtelemente mit unterschiedlichen Leuchteffekten verschaltet werden.

Die DE 10 2013 212 671 A1 betrifft ein Decken- bzw. Wandleuchtensystem mit variabler Leuchtenfunktion. Eine Versorgungsvorrichtung stellt eine Versorgungsspannung oder einen Versorgungsstrom zum Speisen eines Leuchtmittels bereit. Das System umfasst eine Mehrzahl von Grundplatten zur Gestaltung einer abgehängten Decken- bzw. Wandfläche, wobei eine Grundplatte eine mechanische und elektrische Koppeleinrichtung aufweist. Die Grundplatte umfasst Kontakte zur Bereitstellung von elektrischen Versorgungskanälen. Die Grundplatte umfasst ferner Leitermittel zum elektrischen Verbinden von elektrischen Kontakten der Koppeleinrichtung mit elektrischen Kontakten der Koppeleinrichtungen von zumindest drei direkt benachbarten Grundplatten in der abgehängten Decke bzw. Wand. Darüber hinaus ist eine Mehrzahl von flächigen Lichtmodulen vorgesehen, jeweils mit einer, mit der Koppeleinrichtung einer zugeordneten Grundplatte elektrisch und mechanisch lösbar in Eingriff bringbaren Koppeleinrichtung sowie Leuchtmitteln.

Die DE 10 2013 220 764 A1 betrifft eine Beleuchtungseinrichtung. Die Beleuchtungseinrichtung weist ein LED-Band auf. Um die Festigkeit des LED-Bandes in Längsrichtung der Beleuchtungseinrichtung zu vergrößern, ist das LED-Band auf einem Trägerband angeordnet. Hierdurch kann die Beleuchtungseinrichtung in Längsrichtung zwischen zwei Fixpunkten gespannt werden, ohne dass das LED-Band zerreißt. LED-Band und/oder Trägerband können von einem Gehäuse der Beleuchtungseinrichtung umfasst sein.

Die DE 10 2013 225 889 A1 betrifft eine Panelleuchte mit einem Gehäuse zur Aufnahme eines ersten Leuchtmittel und eines zweiten Leuchtmittels, wobei das erste Leuchtmittel weißes Licht einer ersten Farbtemperatur und das zweite Leuchtmittel weißes Licht einer zweiten, von der ersten verschiedene Farbtemperatur emittieren kann und wobei das erste Leuchtmittel und das zweite Leuchtmittel separat angesteuert werden. Dort wird ferner ein System beschrieben, welches eine Panelleuchte und ein mit der Panelleuchte drahtlos kommunizierendes Gerät umfasst, dessen Steuerinformationen eine Einstellung der relativen Verhältnisse der Intensitäten des von den Leuchtmitteln emittierten Lichts durch eine Steuereinheit der Panelleuchte bewirken.

Aus der DE 20 2006 002 162 U1 ist eine Leuchtanordnung zur flächenhaften Lichtabstrahlung mit einem flächenhaften Lichtkörper bekannt, an dessen Schmalseite mindestens eine Lichtquelle zur Einkopplung des Lichtes in die Schmalseite des Lichtkörpers positioniert ist. Dabei wird das eingekoppelte Licht im Wesentlichen an mindestens einer Oberfläche des Lichtkörpers flächenhaft ausgekoppelt.

Die US 2014 0133 137 A1 beschreibt eine modulare Leuchtfliese. Die Leuchtfliese enthält eine Trägerplatte und ein Beleuchtungselement mit einem lichtemittierenden Element, das mittels Auflöten auf der Trägerplatte befestigt ist. Ferner sind Mittel zur Energieversorgung, wie eine Batterie, des Beleuchtungselements vorgesehen, wobei die Mittel elektrische Leitungen umfassen. Die elektrischen Leitungen sind mit einem elektrischen Verbindungsmittel verbunden, welches mechanisch an der Trägerplatte befestigt ist, um mechanische und elektrische Serienschaltung von mehreren modularen Leuchtfliesen zu ermöglichen. Eine Schutzabdeckung ist dem Beleuchtungselement zugeordnet. Dabei wird das durch das Beleuchtungselement ausgestrahlte Licht zu einem vorbestimmten Maß weiterleitet. Eine weitere Haftschicht ist zwischen der Schutzabdeckung und der Trägerplatte derart angeordnet, dass die Trägerplatte die Beleuchtungselemente bedeckt und gegen mechanische Belastungen und Umweltbelastungen beschützt. Die Schutzabdeckung enthält Mosaiksteine, die aus in der Bauindustrie gebräuchlichen Materialien gefertigt sind. Sie weisen die ähnlichen thermischen Merkmale auf, wie die am allermeisten in der Bauindustrie verwendeten Bodenbeläge und Fliesen.

Aus der DE 10 2008 014 172 A1 ist ein Beleuchtungssystem mit mehreren in einer zwel- oder dreidimensionalen Struktur angeordneten Leuchtmitteln zu schaffen bekannt, das sich problemlos verändert, insbesondere erweitern lässt und das unvorhersehbar wirkende Beleuchtungsereignisse ermöglicht. Das Beleuchtungssystem umfasst mehrere Leuchtmodule, die jeweils mindestens ein Leuchtmittel aufweisen. Jedem Leuchtmodul ist eine Steuerung zumindest für die Leuchtmittel zugeordnet. Die Steuerung jedes Leuchtmoduls mit der Steuerung mindestens eines benachbarten Leuchtmoduls über ein Kommunikationssystem ist zumindest zur Übertragung von Steuerungsinformationen verbunden.

Die bekannten Beleuchtungssysteme haben den Nachteil, dass die Module nichts voneinander wissen. Häufig werden sie lediglich zentral von einem Steuerungs-Knoten, einer zentralen Rechnereinheit, angesteuert. Hierdurch lassen sich die Beleuchtungsmodule nicht ohne weiteres miteinander kombinieren und ohne weiteres erweitern. Hierdurch muss jedes Mal der zentrale Steuerungs-Knoten die neue Kombination der Beleuchtungsmodule mitgeteilt werden. Eine dezentrale Ansteuerung der Beleuchtungsmodule gibt es nicht. Fällt ein Modul aus, so kann es passieren, dass ein ganzer Bereich unbeleuchtet bleibt.

### Offenbarung der Erfindung

Aufgabe der Erfindung ist es daher, die Nachteile des Standes der Technik zu vermeiden und insbesondere ein Beleuchtungssystem zu schaffen, welches individuelle Beleuchtungseffekte erzeugt und dem Ausfall von Modulen bei der Beleuchtung entgegenwirkt.

Erfindungsgemäß wird die Aufgabe dadurch gelöst, dass ein modulares Beleuchtungssystem zur Befestigung an einer Fläche entsprechend dem Oberbegriff des Anspruchs 1, die Merkmale des Kennzeichnenden Teils aufweist. Die vorliegende Erfindung beruht auf dem Prinzip, dass jedes Beleuchtungsmodul für sich autark ausgebildet ist, aber mit anderen Beleuchtungsmodulen zur Koordinierung von Beleuchtung Effekten kommuniziert. Es kann vorkommen, dass ein Beleuchtungsmodul ganz oder teilweise ausfällt. Durch die Kommunikationsmittel und die Schalt- und Steuereinheit lassen sich bestimmte Funktionen des ausgefallenen Moduls kompensieren. Bei Erfassung einer

Fehlerhaftigkeit eines Beleuchtungsmoduls übernehmen benachbarte Beleuchtungsmodule die Aufgaben zur Leuchtversorgung und/oder Spannungsversorgung und/oder Schalt- bzw. Steuerung des Beleuchtungsmoduls. Die Kommunikationsmittel sind an jedem Beleuchtungsmodul vorgesehen, damit Daten untereinander ausgetauscht werden können. Dadurch ist ein solches Beleuchtungssystem ohne große Konfiguration beliebig erweiterbar. Die Schalt-und Steuereinheiten solcher Beleuchtungsmodule werden derart programmiert, dass sie die Kommunikationsmittel in definierter Weise ansteuern, um Daten zu übermitteln. Die Daten werden von den anderen Beleuchtungsmodulen verarbeitet, sodass sich besondere Beleuchtungseffekte durch diese Maßnahme erzielen lassen. Durch die Selbstständigkeit der Beleuchtungsmodule können diese beliebig in ein bestehendes Beleuchtungssystem mit solchen Festkörpermodulen eingebunden werden.

Besondere Effekte können bei einem erfindungsgemäßen Beleuchtungssystem dadurch erzielt werden, wenn wenigstens ein Beleuchtungsmodul einen Bewegungssensor, einen Berührungssensor, einen Wärmesensor und/oder lichtempfindlichen Fotosensor aufweist. Unter dem Begriff Bewegungssensor sollen auch Näherungssensoren verstanden werden, die eine Person oder deren Bewegung erfassen. Die genannten Sensoren erfassen entsprechend ihrer Funktion ihre Umgebung. Hierdurch können beispielsweise die Beleuchtungsmodule in geeigneter Weise geschaltet werden. Die
berührungsempfindlichen Sensoren, auch Touchsensoren genannt, sind ggf. insbesondere geeignet, das jeweilige Beleuchtungsmodul manuell zu steuern. Der berührungsempfindliche Sensor bedeckt erfindungsgemäß die Beleuchtungsmodule ganz oder teilweise, wobei der berührungsempfindliche Sensor lichtdurchlässig und diffus streuend ausgebildet ist. Der berührungsempfindliche Sensor ist vorzugsweise kapazitiv ausgestaltet. Die Lichtquelle der Festkörperbeleuchtungseinheit weist erfindungsgemäß eine externe Lichtquelle auf, und ist als Lichtleiter ausgestaltet, die mit Licht der externen Lichtquelle gespeist wird. Die Festkörperbeleuchtungseinheit verhält sich in dem Fall indirekt und passiv and nicht unmittelbar bzw. direkt und aktiv. Die Festkörperbeleuchtungseinheit kann, in anderen Ausführungen die nicht unter den Umfang der Ansprüche fallen, beispielsweise als ein Reflektor, oder auch als eine lumineszierende Fläche ausgestaltet sein. Diese Information der Sensoren kann über die Kommunikationsmittel problemlos auch an die anderen Beleuchtungsmodule weitergeleitet werden die mit entsprechenden Beleuchtungseffekten aufwarten können. In einer bevorzugten Ausgestaltung des erfindungsgemäßen modularen Beleuchtungssystems kommunizieren die Kommunikationsmittel drahtlos miteinander. Vorzugsweise erfolgt eine solche Kommunikation über elektromagnetische Wellen, wie Funk oder Licht. Die Kommunikationsmittel müssen daher dafür ausgelegt sein über Funk oder über Licht miteinander zu kommunizieren.

Eine vorteilhafte Variante des modularen Beleuchtungssystems zu der drahtlosen Verbindung besteht darin, dass als Verbindung ein Draht verwendet wird. Das erfindungsgemäße Beleuchtungssystem ist daher derart ausgestaltet, dass die Kommunikationsmittel über Kabel und/oder über die Montageplattform miteinander kommunizieren, wobei die Montageplattform elektrisch leitend ausgebildet ist.

Eine vorteilhafte Ausbildung des erfindungsgemäßen modularen Beleuchtungssystems besteht weiterhin darin, dass Steckverbindungen vorgesehen sind, mit denen die Beleuchtungsmodule auf die Montageplattform aufgesteckt werden. Diese Maßnahme dient dazu, dass die Beleuchtungsmodule auf einfache Weise an der Montageplattform montiert werden können. Hierbei ist kein großer Arbeitsaufwand erforderlich, sofern die Montageplattform bereits montiert ist. Auf der Montageplattform können die Beleuchtungsmodule nach Maßgabe der Steckverbindungen zudem beliebig angeordnet werden.

In einer weiteren bevorzugten Ausgestaltung des erfindungsgemäßen modularen Beleuchtungssystems weisen wenigstens zwei Beleuchtungsmodule jeweils eine eigene Spannungsversorgung auf. Hierdurch wird sichergestellt, dass die Beleuchtungsmodule mit elektrischer Energie versorgt werden. Die Energieversorgung dient dabei nicht nur der Beleuchtung, sondern auch der Steuerung und der Kommunikation.

Vorzugsweise weist die Spannungsversorgung in einer Variante des erfindungsgemäßen modularen Beleuchtungssystems einen Energiespeicher zur Speicherung elektrischer Energie auf. Die Maßnahme dient dazu, dass im Bedarfsfall auf Netzspannung verzichtet werden kann. Die Beleuchtungssysteme sind damit weitestgehend unabhängig von Spannungszuführungen.

Die Unabhängigkeit eines solchen modularen Beleuchtungssystems wird zudem dadurch in einer weiteren vorteilhaften Ausgestaltung der Erfindung erreicht, dass ein Photovoltaikmodul vorgesehen ist, welches den Energiespeicher mit elektrischer Energie lädt.

Eine weitere vorteilhafte Ausbildung des erfindungsgemäßen modularen Beleuchtungssystems ergibt sich dadurch, dass wenigstens zwei Beleuchtungsmodule jeweils eine separate Schalt- und/oder Steuereinheit aufweisen. Diese Maßnahme hat den Effekt, dass praktisch jedes einzelne Beleuchtungsmodul über eine separate Schalt-und/oder Steuereinheit verfügt. Jedes Beleuchtungsmodul lässt sich dadurch individuell steuern. Ansteuerungen von außen, beispielsweise von einem zentralen Steuerungsknoten sind nicht zwingend notwendig.

Vorzugsweise ist die Schalt- und/oder Steuereinheit in einer besonderen Ausgestaltung der Erfindung als eine programmierbare digitale mikroprozessorgesteuerte Einheit mit einem Datenspeicher ausgebildet. Dadurch lässt sich jedes einzelne Beleuchtungsmodul separat beispielsweise mit einem Beleuchtungs- und Kommunikationsalgorithmus programmieren.

Eine weitere Variante des erfindungsgemäßen modularen Beleuchtungssystems besteht darin, dass eine zentrale Rechnereinheit vorgesehen ist, welche die Schalt- und/oder Steuereinheiten koordiniert. Diese Maßnahme dient dazu, dass im Bedarfsfall die einzelnen Schalt- und Steuereinheiten der Beleuchtungsmodule zentral verwaltet werden können.

Eine vorteilhafte Ausgestaltung des erfindungsgemäßen Beleuchtungssystems wird weiterhin dadurch erreicht, dass ein Beleuchtungsmodul wenigstens zwei Festkörperbeleuchtungseinheiten mit unterschiedlichen Leuchtstärken und/oder mit unterschiedlichen Farben aufweist. Besondere Beleuchtungseffekte können durch diese Maßnahme erzielt werden. Hier lassen sich nicht nur Farben optisch, wie bei einem Rot-Grün-Blau-Farbmonitor, mischen, sodass sich zahlreiche unterschiedliche Farben bilden können, sondern auch die Beleuchtungsintensität einzelner Festkörperbeleuchtungseinheiten kann für neue Beleuchtungseffekte variiert werden.

In einer weiteren bevorzugten Ausbildung des erfindungsgemäßen Beleuchtungssystems ist vorgesehen, dass die Montageplattform modular zusammensetzbar ausgebildet ist. Durch die modulare Montageplattform ist das Beleuchtungssystem praktisch beliebig erweiterbar. Außerdem kann ein solches Beleuchtungssystem durch diesen modularen Aufbau besser transportiert werden. Die Segmente der Montageplattform müssen am Einsatzort nur zusammengesetzt werden. Bei Bedarf besteht auch die Möglichkeit Sollbruchstellen bei der Montageplattform oder Segmenten der Montageplattform vorzusehen, um sie in geeigneter Weise an räumliche Gegebenheiten anzupassen.

LEDs sind handelsübliche Waren, die heutzutage leicht zu verbauen sind. Sie gibt es in zahlreichen Farben und Lichtstärken. Eine vorteilhafte Variante des erfindungsgemäßen Beleuchtungssystems besteht daher darin, dass die Festkörperbeleuchtungseinheit von wenigstens einer Leuchtdiode gebildet wird.

Weitere Ausgestaltungen und Vorteile ergeben sich aus dem Gegenstand der Unteransprüche, sowie den Zeichnungen mit den dazugehörigen Beschreibungen. Ein Ausführungsbeispiel ist nachstehend unter Bezugnahme auf die beigefügten Zeichnungen näher erläutert. Der Schutzumfang soll nicht alleine auf das Ausführungsbeispiel beschränkt sein. Zum Schutzumfang gehören alle Dinge, die dem Fachmann jetzt und zukünftig in naheliegender Weise zur Verfügung stehen.

### Kurze Beschreibung der Zeichnung

- Fig. 1: zeigt in einer schematischen Prinzipskizze ein erfindungsgemäßes modulares Beleuchtungssystem von einer Frontseite.
- Fig. 2: zeigt in einer schematischen Prinzipskizze ein erfindungsgemäßes modulares Beleuchtungssystem in einer Hinteransicht mit verkabelten Kommunikationsmitteln.
- Fig. 3: zeigt in einer schematischen Prinzipskizze ein erfindungsgemäßes modulares Beleuchtungssystem von einer Hinteransicht mit Funkverbindungen für die Kommunikationsmittel.
- Fig. 4: zeigt in einer schematischen Prinzipskizze einen Schnitt eines modularen Beleuchtungsmoduls.

### Bevorzugtes Ausführungsbeispiel

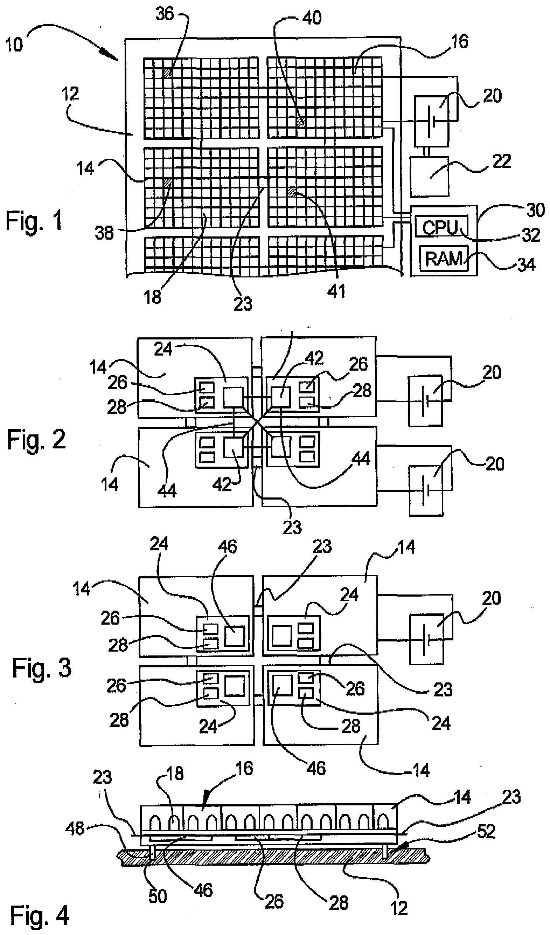

In Fig. 1 wird mit 10 ein erfindungsgemäßes Beleuchtungssystem zur Befestigung an einer Fläche bezeichnet. Die Fläche kann beispielsweise als Wand oder als flächige Beleuchtungsständer ausgebildet sein. Das Beleuchtungssystem 10 wird hier von einer sichtbaren Frontseite dargestellt.

Das Beleuchtungssystem 10 enthält eine Montageplattform 12, auf der Beleuchtungsmodule 14 befestigt sind. Im vorliegenden Ausführungsbeispiel sind auf der Montageplattform 12 sechs Beleuchtungsmodule 14 angedeutet. Die Beleuchtungsmodule 14 umfassen Festkörperbeleuchtungseinheiten 16. Bei den Festkörperbeleuchtungseinheiten 16 handelt es sich vorliegend um eine oder mehrere zusammengefasste Leuchtdioden 18, so genannte LEDs (Light Emitting Diodes). Die Leuchtdioden 18 sind mosaikartig auf den Beleuchtungsmodulen 14 angeordnet.

Die Beleuchtungsmodule 14 werden von einer Spannungsversorgung 20 mit elektrischer Energie versorgt. Dabei werden wenigstens zwei Beleuchtungsmodule 14 von wenigstens einer Spannungsversorgung 20 versorgt. Die Spannungsversorgung 20 kann dabei eine herkömmliche Netzspannung, ein Akkumulator 22 oder aber auch ein Photovoltaikmodul sein. Die Spannungsversorgung 20 kann aber auch beispielsweise aus einem Photovoltaikmodul und einem Akkumulator 22 kombiniert sein. Beleuchtungsmodule 14 sind derart auf der Montageplattform 12 befestigt, das über Kontakte 23 die Spannungsversorgung 20 die Beleuchtungsmodule 14 mit der erforderlichen elektrischen Energie für deren Betrieb versorgt.

Eine Schalt- und Steuereinheit 24 schaltet bzw. steuert die einzelnen Beleuchtungsmodule 14. Die Schalt- und Steuereinheit 24 arbeitet mit einer mikroprozessorgesteuerten Einheit 26 und einem Datenspeicher 28. Die Schalt- und Steuereinheiten 24 der Beleuchtungsmodule 14 sind mit einer prozessorgesteuerten Rechnereinheit 30 verbunden. Die Rechnereinheit 30 verfügt über einen Mikroprozessor 32 und einen Datenspeicher 34. Die Rechnereinheit 30 ist in der Lage die Schalt- und Steuereinheiten 24 zentral anzusteuern. Jedes Beleuchtungsmodul 14 kann eine eigene Schalt- und Steuereinheit 24 verfügen. Es können allerdings auch mehrere Beleuchtungsmodule 14 eine Schalt- und Steuereinheit 24 gemeinsam nutzen. Die Schalt- und Steuereinheit 24 kann im vorliegenden Ausführungsbeispiel jede einzelne Festkörperbeleuchtungseinheit separat ansteuern.

Ein Bewegungssensor 36 ist in einem Beleuchtungsmodul 14 vorgesehen. Weiterhin sind ein Wärmesensor 38 und ein lichtempfindlicher Fotosensor 40 in einem Beleuchtungsmodul 14 angeordnet. Ein berührungsempfindlicher Sensor (41) bedeckt die Beleuchtungsmodule (14) ganz oder teilweise, wobei der berührungsempfindliche Sensor (41) lichtdurchlässig und/oder diffus streuend ausgebildet ist. Der berührungsempfindliche Sensor (41) ist zur Erfassung von Berührungen kapazitiv ausgebildet. Der Bewegungssensor 36, der Wärmesensor 38, der berührungsempfindliche Sensor 41 und der lichtempfindliche Fotosensor 40 sind in das mosaikartige Gefüge der Beleuchtungsmodule 14 zwischen den Festkörperbeleuchtungseinheiten 16 eingefügt. Der Bewegungssensor 36, der Wärmesensor 38, der berührungsempfindliche Sensor 41 und der Fotosensor 40 erfassen entsprechend ihrer Funktion Teile der Umgebung. Die Signale der Sensoren 36, 38, 40 und 41 werden digitalisiert und an die Schalt- und Steuereinheit 24 zur Weiterverarbeitung weitergeleitet. Die Schalt- und Steuereinheit 24 steuert entsprechend die Festkörperbeleuchtungseinheiten 16 der Beleuchtungsmodule 14 an. Die digitalen Signale der Sensoren 36, 38, 40 und 41 können auch an die anderen Beleuchtungsmodule 14 von der Schalt- und Steuereinheit 24 eines Beleuchtungsmoduls 14 weitergeleitet werden.

In Fig. 2 wird eine Anordnung von Beleuchtungsmodulen 14 in einer Prinzipskizze von der Hinterseite dargestellt. Jedes Beleuchtungsmodul 14 weist Kommunikationsmittel 42 auf. Die Kommunikationsmittel 42 eines jeden Beleuchtungsmoduls 14 sind über Kabel 44 bzw. elektrische Leitungen untereinander vernetzt. Die Kommunikationsmittel 42 sind Bestandteile der Schalt- und Steuereinheit 24. Die Schalt-und Steuereinheit 24 steuert insbesondere jeweils die Kommunikationsmittel 42. Über die Kontakte 23 sind die Beleuchtungsmodule 14 elektrisch miteinander verbunden, sodass jedes Beleuchtungsmodul 14 mit ausreichender elektrischer Energie versorgt wird. Für jeweils zwei Beleuchtungsmodule 14 ist im vorliegenden Ausführungsbeispiel eine Spannungsversorgung 20 vorgesehen.

In Fig. 3 wird analog zu Fig. 2 eine Anordnung von Beleuchtungsmodulen 14 in einer Prinzipskizze von der Hinterseite dargestellt. Jedes Beleuchtungsmodul 14 weist Kommunikationsmittel 46 auf. Das Kommunikationsmittel 46 ist eine Variante, wie sie in Fig. 2 beschrieben ist. Die Kommunikationsmittel 46 eines jeden Beleuchtungsmoduls 14 sind nämlich über Funk untereinander vernetzt. Bei den Kommunikationsmitteln 46 handelt es sich um Mikrochips, die beispielsweise über den Bluetooth- oder Wifi-Standard Daten digital austauschen. Die Kommunikationsmittel 46 sind Bestandteile der Schalt- und Steuereinheit 24. Die Schalt-und Steuereinheit 24 steuert insbesondere jeweils die Kommunikationsmittel 46. Über die Kontakte 23 sind die Beleuchtungsmodule 14 elektrisch miteinander verbunden, sodass jedes Beleuchtungsmodul 14 auch hier mit elektrischer Spannung versorgt wird. Im vorliegenden Ausführungsbeispiel ist eine einzige Spannungsversorgung 20 für alle Beleuchtungsmodul 14 vorgesehen.

In Fig. 4 wird schematisch ein Schnitt durch ein Beleuchtungsmodul 14 gezeigt. In bzw. an dem Beleuchtungsmodul 14 sind die LEDs 18 der Festkörperbeleuchtungseinheiten 16 angeordnet. Die LEDs 18 können je nach Bedarf verschiedene Farben aufweisen. Eine Festkörperbeleuchtungseinheit 16 kann dabei beispielsweise aus drei LEDs 18 gebildet sein. Sofern die Farben z.B. Rot, Grün und Blau verwendet werden, können die Farben auch so gemischt werden, dass sich auch andere Farben aus den LEDs 18, wie beispielsweise auch bei einem Farbmonitor, realisieren lassen. Zusätzlich kann auch eine weiß leuchtende LED eingesetzt werden. Die LEDs 18 lassen sich von der Schalt-und Steuereinheit 24 separat ansteuern. Über die Kontakte 23 erhält das Beleuchtungsmodul 14 seine Versorgungsspannung von der hier nicht dargestellten Spannungsversorgung 20 (vgl. Fig. 1 bis 3). Das Beleuchtungsmodul 14 ist auf der Montageplattform 12 mit Befestigungsstiften 48 befestigt. Die Montageplattform 12 weist dazu geeignete Aufnahmen 50 für die Befestigungsstifte 48 auf. Die Befestigungsstifte 48 und die Aufnahmen 50 bilden Steckverbindungen 52. Über das Kommunikationsmittel 46 kann das Beleuchtungsmodul 14 mit den anderen Beleuchtungsmodulen 14 über Funk kommunizieren.

Durch die Kommunikationsmittel 42 bzw. 46 können Daten zwischen den Beleuchtungsmodulen 14 ausgetauscht werden. In Kombination mit den Sensoren 36, 38 und 40 lassen sich besondere Beleuchtungseffekte erzielen, da die Beleuchtungsmodule 14 mit den jeweils anderen Modulen 14 kommunizieren. Durch unterschiedliche Farben und unterschiedliche Leuchtstärken der Festkörperbeleuchtungseinheiten 16 lassen sich variierende Beleuchtungseffekte erzielen. Jedes Beleuchtungsmodul 14 arbeitet weitestgehend oder vollständig auch autark. Durch die Kommunikationsmittel 42 bzw. 46 können beliebige Beleuchtungsmodule 14 zusätzlich mit entsprechender Schnittstelle an das Beleuchtungssystem 10 angefügt werden. Das Beleuchtungssystem 10 ist dadurch nahezu beliebig erweiterbar. Es kann vorkommen, dass in dem Beleuchtungssystem 10 ein Beleuchtungsmodul 14 ganz oder teilweise ausfällt. Durch die Kommunikationsmittel 42, 46 und die Schalt- und Steuereinheit 24 lassen sich bestimmte Funktionen des ausgefallenen Beleuchtungsmoduls 14 durch benachbarte Beleuchtungsmodule 14 kompensieren. Bei Erfassung einer Fehlerhaftigkeit eines Beleuchtungsmoduls 14 übernehmen benachbarte Beleuchtungsmodule 14 die Aufgaben zur Leuchtversorgung und/oder Spannungsversorgung und/oder Schalt- bzw. Steuerung des Beleuchtungsmoduls 14.
- 10: Beleuchtungssystem
- 12: Montageplattform
- 14: Beleuchtungsmodule
- 16: Festkörperbeleuchtungseinheiten
- 18: Leuchtdioden
- 20: Spannungsversorgung
- 22: Akkumulator
- 23: Kontakte
- 24: Schalt- und Steuereinheit
- 26: Mikroprozessor
- 28: Datenspeicher
- 30: Rechnereinheit
- 32: Mikroprozessor
- 34: Datenspeicher
- 36: Bewegungssensor
- 38: Wärmesensor
- 40: Fotosensor
- 41: berührungsempfindlicher Sensor
- 42: Kommunikationsmittel (mit Kabel)
- 44: Kabel
- 46: Kommunikationsmittel (mit Funk)
- 48: Befestigungsstifte
- 50: Aufnahmen in der Montageplattform
- 52: Steckverbindungen

## Patentansprüche

1. Modulares Beleuchtungssystem (10) zur Befestigung an einer Fläche enthaltend
a) wenigstens zwei Beleuchtungsmodule (14) mit wenigstens jeweils einer Festkörperbeleuchtungseinheit (16),
b) eine Montageplattform (12), welche an der Fläche zur lösbaren Aufnahme der Beleuchtungsmodule (14) befestigt ist,
c) eine elektrische Spannungsversorgung (20) zur Versorgung der Beleuchtungsmodule (14),
d) eine Schalt- und/oder eine Steuereinheit (24) zum Schalten und/oder Steuern der Beleuchtungsmodule (14),
e) ein Kommunikationsmittel (42, 46) für jedes Beleuchtungsmodul (14), welches die Beleuchtungsmodule (14) vernetzt und untereinander kommunizieren lässt, wobei
f) bei Erfassung einer Fehlerhaftigkeit eines Beleuchtungsmoduls (14) benachbarte Beleuchtungsmodule (14) die Aufgaben zur Leuchtversorgung und/oder Spannungsversorgung (20) und/oder Schalt- bzw. Steuerung (24) des Beleuchtungsmoduls (14) übernehmen,
**dadurch gekennzeichnet, dass**
g) die Festkörperbeleuchtungseinheit (16) eine externe Lichtquelle aufweist, und als ein Lichtleiter ausgestaltet ist, die mit Licht von der externen Lichtquelle gespeist wird, und
h) ein berührungsempfindlicher Sensor die Beleuchtungsmodule (14) ganz oder teilweise bedeckt, wobei der berührungsempfindliche Sensor (41) lichtdurchlässig und diffus streuend ausgebildet ist.

2. Modulares Beleuchtungssystem (10) nach Anspruch 1, **dadurch gekennzeichnet, dass** die Schalt- und/oder eine Steuereinheit (24) von dem berührungsempfindlichen Sensor (41) angesteuert wird.

3. Modulares Hintergrund-Beleuchtungssystem (10) nach einem der Ansprüche 1 oder 2, **dadurch gekennzeichnet, dass** der berührungsempfindliche Sensor (41) kapazitiv ausgebildet ist.

4. Modulares Beleuchtungssystem (10) nach einem der Ansprüche 1 bis 3, **dadurch gekennzeichnet, dass** die Kommunikationsmittel (42) über Kabel (44) und/oder über die Montageplattform (12) miteinander kommunizieren, wobei die Montageplattform (12) elektrisch leitend ausgebildet ist und/oder die Kommunikationsmittel (46) drahtlos miteinander kommunizieren.

5. Modulares Beleuchtungssystem (10) nach einem der Ansprüche 1 bis 4, **gekennzeichnet durch** Steckverbindungen (52), mit denen die Beleuchtungsmodule (14) auf die Montageplattform (12) aufgesteckt werden.

6. Modulares Beleuchtungssystem (10) nach einem der Ansprüche 1 bis 5, **dadurch gekennzeichnet, dass** wenigstens ein Beleuchtungsmodul (14) einen Bewegungssensor (36), einen Wärmesensor (38) und/oder einen lichtempfindlichen Fotosensor (40) aufweist.

7. Modulares Beleuchtungssystem (10) nach einem der Ansprüche 1 bis 6, **dadurch gekennzeichnet, dass** ein Beleuchtungsmodul (14) wenigstens zwei Festkörperbeleuchtungseinheiten (16) mit unterschiedlichen Leuchtstärken und/oder mit unterschiedlichen Farben aufweist.

8. Modulares Beleuchtungssystem nach einem der Ansprüche 1 bis 7, **dadurch gekennzeichnet, dass** die Festkörperbeleuchtungseinheit (16) von wenigstens einer Leuchtdiode (18) gebildet wird.

## Claims

1. Modular lighting system (10) for attachment to a surface comprising
a) at least two lighting modules (14) with at least one solid-state lighting unit (16) each,
b) a mounting platform (12) which is fastened to the surface for detachably mounting the lighting modules (14),
c) an electrical power supply (20) to supply the lighting modules (14),
d) a switching and/or control unit (24) to switch and/or control the lighting modules (14),
e) a communication means (42, 46) for each lighting module (14) which links the lighting modules (14) and permits them to communicate with each other, whereby
f) upon detection of an error in a lighting module (14), adjacent lighting modules (14) assume the task of supplying light and/or power (20) and/or switching or controlling (24) the lighting module (14),
**characterized in that**
g) the solid-state lighting unit (16) has an external light source and is designed as a light guide which is supplied with light from an external light source, and
h) a touch-sensitive sensor which completely or partially covers the lighting module (14), whereby the touch-sensitive sensor (41) is designed to be transparent and diffuse scattering.

2. Modular lighting system (10) according to Claim 1, **characterized in that** the switching and/or control unit (24) is actuated by the touch-sensitive sensor (41).

3. Modular backlighting system (10) according to one of Claims 1 or 2, **characterized in that** the touch-sensitive sensor (41) is designed to be capacitive.

4. Modular lighting system (10) according to one of Claims 1 to 3, **characterized in that** the communication means (42) communicate with each other via a cable (44) and/or the mounting platform (12), whereby the mounting platform (12) is designed to be electrically conductive and/or the communication means communicate with each other wirelessly.

5. Modular lighting system (10) according to one of Claims 1 to 4, **characterized by** plug connections (52), with which the lighting modules (14) are plugged into the mounting platform (12).

6. Modular lighting system (10) according to one of Claims 1 to 5, **characterized in that** at least one lighting module (14) is equipped with a motion sensor (36), a heat sensor (38), and/or a light-sensitive photosensor (40).

7. Modular lighting system (10) according to one of Claims 1 to 6, **characterized in that** a lighting module (14) has two solid-state lighting units (16) with different luminosities and/or with different colors.

8. Modular lighting system according to one of Claims 1 to 7, **characterized in that** the solid-state lighting unit (16) is formed by at least one LED (18).

## Revendications

1. Système d'éclairage modulaire destiné à être fixé sur une surface, comprenant
(a) au moins deux modules d'éclairage dont chacun est muni d'au moins une unité d'éclairage à semi-conducteurs (16),
(b) une plaque de montage (12) qui est fixée sur la surface destinée à loger les modules d'éclairage (14) de manière à pouvoir s'enlever,
(c) un dispositif d'alimentation en courant électrique (20) destiné à alimenter les modules d'éclairage (14),
(d) une unité de commutation et/ou de commande (24) destinée à commuter et/ou commander les modules d'éclairage (14),
(e) un moyen de communication (42, 46) pour chaque module d'éclairage (14) qui interconnecte les modules d'éclairage (14) et les fait communiquer entre eux,
(f) en cas de détection d'une défectuosité de l'un des modules d'éclairage (14), les modules d'éclairage voisins (14) se chargeant d'alimenter en éclairage et/ou d'alimenter en courant électrique (20) et/ou soit de commuter soit de commander (24) le module d'éclairage (14),
**caractérisé en ce que**
(g) l'unité d'éclairage à semi-conducteurs (16) présente une source de lumière externe et est configurée sous forme de conducteur de lumière qui est alimenté en lumière par la source de lumière externe, et
(h) un capteur tactile couvre les modules d'éclairage (14) entièrement ou partiellement, le capteur tactile (41) étant configuré de sorte à laisser passer la lumière et à la disperser de manière diffuse.

2. Système d'éclairage modulaire (10) selon la revendication 1, **caractérisé en ce que** l'unité de commutation et/ou de commande (24) est commandée par le capteur tactile (41).

3. Système d'éclairage de fond modulaire (10) selon l'une quelconque des revendications 1 ou 2, **caractérisé en ce que** le capteur tactile (41) est configuré sous forme de capteur capacitif.

4. Système d'éclairage modulaire (10) selon l'une quelconque des revendications 1 à 3, **caractérisé en ce que** les moyens de communication (42) communiquent entre eux par l'intermédiaire de câble (44) et/ou de la plaque de montage (12), la plaque de montage (12) étant configurée de sorte à conduire le courant électrique et/ou les moyens de communication (46) communiquant entre eux sans fil.

5. Système d'éclairage modulaire (10) selon l'une quelconque des revendications 1 à 4, **caractérisé par** des connexions à fiches (52) permettant d'enficher les modules d'éclairage (14) sur la plaque de montage (12).

6. Système d'éclairage modulaire (10) selon l'une quelconque des revendications 1 à 5, **caractérisé en ce qu'** au moins un module d'éclairage (14) présente un capteur de déplacement (36), un capteur de chaleur (38) et/ou un capteur photoélectrique (40) sensible à la lumière.

7. Système d'éclairage modulaire (10) selon l'une quelconque des revendications 1 à 6, **caractérisé en ce qu'**un module d'éclairage (14) présente au moins deux unités d'éclairage à semi-conducteurs (16) de luminosités différentes et/ou de couleurs différentes.

8. Système d'éclairage modulaire (10) selon l'une quelconque des revendications 1 à 7, **caractérisé en ce que** l'unité d'éclairage à semi-conducteurs (16) est formée d'au moins une diode luminescente (18).
